# EUROPÄISCHE PATENTSCHRIFT

(11) **EP 3 241 813 B1**
(45) Veröffentlichungstag und Bekanntmachung des Hinweises auf die Patenterteilung: **22.05.2019**
(21) Anmeldenummer: 17168723.9
(22) Anmeldetag: 28.04.2017
(51) Int. Cl.: C04B 28/14, C04B 38/10, C04B 28/02

(54) **VERFAHREN ZUR HERSTELLUNG EINES MINERALISCHEN DÄMMMATERIALS**
PROCESS FOR MANUFACTURING A MINERAL INSULATING MATERIAL
PROCÉDÉ DE FABRICATION D'UN MATÉRIAU ISOLANT MINÉRAL

(30) Priorität: 06.05.2016 DE 102016207858
(43) Veröffentlichungstag der Anmeldung: 08.11.2017
(73) Patentinhaber: Baustoffwerke Löbnitz GmbH & Co. KG, 04509 Löbnitz (DE)
(72) Erfinder: Droll, Enrico, 06925 Annaburg OT Prettin (DE)
(74) Vertreter: Weickmann & Weickmann PartmbB

(56) Entgegenhaltungen:
- EP-A2- 0 673 733
- WO-A1-2010/026155
- WO-A1-2011/131378

## Beschreibung

Die Erfindung betrifft ein Verfahren zur Herstellung eines mineralischen Dämmmaterials.

Poröse mineralische Materialien wie Porenbeton oder Schaumbeton sind als Baustoffe bekannt. Porenbeton wird üblicherweise durch Vermischen der Ausgangsstoffe Brandkalk, Zement, Quarzsand und Wasser mit einem Porenbildner wie Aluminiumpulver oder Aluminiumpaste hergestellt. Das metallische Aluminium entwickelt in der alkalischen Suspension Wasserstoffgas, so dass viele kleine Gasblasen entstehen, welche die allmählich ansteifende Mischung aufschäumen. Nach einem Dampfhärteprozess in einem Autoklaven besteht das fertige Produkt aus einer kristallinen Phase, welche zum großen Teil dem natürlichen Mineral Tobermorit entspricht. Bei der Herstellung von Schaumbeton werden anstelle von Aluminium Schaummittel eingesetzt. Ein vorerzeugter Schaum wird in den Beton eingemischt. Bekannt sind Schaummittel auf Grundlage von Tensiden oder Proteinen.

Die europäische Patentanmeldung EP 0 673 733 offenbart ein Verfahren zur Herstellung einer porösen mineralischen Dämmplatte, wobei ein wässriges Gemisch aus Quarzmehl, Kalkhydrat, Zement und Wasser bereitgestellt und Schaum in dieses wässrige Gemisch eingemischt wird. Zusätzlich wird vorgeschlagen, Glasfasern einzumischen. Ein Erhärtungsbeschleuniger wird nicht eingesetzt.

Porenbeton und Schaumbeton zeichnen sich aufgrund ihrer hohen Porosität durch eine im Vergleich zu Beton deutlich geringere Rohdichte aus. Unter der Rohdichte versteht man die Dichte eines porösen Körpers basierend auf dem Volumen einschließlich der Porenräume. Während die Rohdichte bei Normalbeton zwischen etwa 2000 und 2600 kg/m³ liegt, werden mit Porenbeton oder Schaumbeton üblicherweise Rohdichten im Bereich von 400 bis 600 kg/m³ erreicht. Durch den hohen Luftanteil im Porenbeton bzw. Schaumbeton ergeben sich verbesserte Wärmedämmeigenschaften. Ausschlaggebend ist die Wärmeleitfähigkeit, die mit dem Wärmeleitwert λ angegeben wird. Je kleiner der Wert, umso besser ist das Dämmvermögen. Im Fachbereich bekannte Porenbetonmaterialien erreichen Wärmeleitwerte λ von 0,05 bis 0,07 W/mK. Diese Werte sind für die Verwendung als Dämmmaterial, insbesondere zur Außendämmung häufig nicht aus-reichend.

Der Erfindung lag daher die Aufgabe zugrunde, die Herstellung eines leichten porösen Dämmmaterials mit geringer Rohdichte zu ermöglichen, dessen Wärmeleitwert im Vergleich zum Stand der Technik noch weiter verringert ist.

In der vorliegenden Erfindung wurde überraschend gefunden, dass unter Verwendung eines feinporigen Tensidschaums ein mineralisches Dämmmaterial mit hervorragenden wärmedämmenden Eigenschaften erhalten werden kann. Es gelingt, die Rohdichte auf 80 bis 130 kg/m³ zu verringern und einen Wärmeleitwert λ von weniger als 0,040 W/mK zu erreichen.

Ein erster Aspekt der Erfindung betrifft daher ein Verfahren zur Herstellung eines Dämmmaterials umfassend die Schritte:
(i) Bereitstellen eines wässrigen Gemischs, welches Wasser, SiO₂, Kalkhydrat, Zement und einen Erhärtungsbeschleuniger umfasst und welches keine organischen oder anorgansischen Fasern enthält,
(ii) Bereitstellen eines Schaums durch Einbringen von Luft in ein Gemisch umfassend Wasser und ein Tensid,
(iii) Einmischen des Schaums in das wässrige Gemisch, um eine Rohmischung zu erhalten,
(iv) Einbringen der Rohmischung in eine Form und Belassen der Rohmischung für mindestens 5h, vorzugsweise für mindestens 10h und besonders bevorzugt für mindestens 15h, in der Form, um ein Rohmaterial zu erhalten,
(v) Dampfhärten des in Schritt (iv) erhaltenen Rohmaterials in einem Autoklaven, dies ggf. nach Zuschneiden in Teile und
(vi) Trocknen des dampfgehärteten Rohmaterials.

In Schritt (i) wird ein wässriges Gemisch der Ausgangsmaterialien hergestellt. Dabei werden ein silikathaltiges Material, Kalkhydrat (gelöschter Kalk), Zement und ein Erhärtungsbeschleuniger mit Wasser vermischt. Darüber hinaus können weitere optionale Ausgangsmaterialien wie z.B. Kaolin, Meta-Kaolin, Rückgut, Hydrophobierungsmittel, Steinkohle, Flugasche, Anhydrit und weitere im Fachbereich übliche Betonzusatzstoffe und Gemische davon zugegeben werden. Weitere Beispiele für geeignete Zusatzstoffe sind ultrahochfester Beton (UHPC), Tonerde (Aluminium-III-Oxide), Kalkerden und Kieselerden.

Um die Eigenschaften des erfindungsgemäß hergestellten Materials weiter zu optimieren, können Zusatzstoffe wie Zeolithe, Aerogel, Perlite oder Glaskugeln verwendet werden. Diese Zusatzstoffe können entweder bereits in das wässrige Gemisch der Ausgangsmaterialies von Schritt (i) oder zu einem späteren Zeitpunkt des Verfahrens zugegeben werden. Aerogel ist ein hochporöser Festkörper vorzugsweise auf Silikatbasis, der dem erfindungsgemäßen Material eine noch weiter verringerte Wärmeleitfähigkeit verleihen kann. Perlite werden insbesondere in Form von Blähperlit zugegeben. Diese verringern ebenfalls die Wärmeleitfähigkeit des Materials. Glaskugeln wie z. B. 3M Glass Bubbles sind Glaskügelchen mit einem Durchmesser von üblicherweise 1 bis 1000 µm. Diese fungieren als leichtgewichtiger Füllstoff, der aufgrund seiner geringen Wärmeleitfähigkeit in der Lage ist, dem erfindungsgemäß hergestellten Material eine besonders gute wärmedämmende Wirkung zu verleihen. Wenn diese oder andere Zusatzstoffe eingesetzt werden, so können sie zu einem beliebigen Zeitpunkt während der Herstellung zugegeben werden, sofern sichergestellt werden kann, dass sich die Zusatzstoffe gleichmäßig in dem Material verteilen.

Die Bezeichnung "SiO₂" wird im Sinne der Erfindung zusammenfassend für beliebige silikathaltige Materialien verwendet.

Als silikathaltiges Material eignen sich Quarzsand bzw. quarzhaltiger Sand oder quarzhaltiges Gesteinsmehl. Bezogen auf den Gesamtfeststoffgehalt des wässrigen Gemischs von Schritt (i) beträgt der Anteil an SiO₂ etwa 25 bis 35 Gew.-%, vorzugsweise etwa 27 bis 32 Gew.-%.

Die Begriffe Kalkhydrat und gelöschter Kalk werden hierin austauschbar verwendet und bezeichnen Calciumhydroxid. Bezogen auf den Gesamtfeststoffgehalt des wässrigen Gemischs von Schritt (i) wird Kalkhydrat in einer Menge von etwa 18 bis 35 Gew.-%, vorzugsweise etwa 25 bis 32 Gew.-% verwendet.

Zement besteht chemisch gesehen aus etwa 58 bis 76 % Calziumoxid (CaO), 18 bis 26 % Siliziumdioxid (SiO₂), 4 bis 10 % Aluminiumoxid (Al₂O₃) und 2 bis 5 % Eisenoxid (Fe₂O₃). Diese Hauptbestandteile liegen im Zement vorrangig in Form von Tricalciumsilikat (3CaO*SiO₂), Dicalciumsilikat (2CaO*SiO₂), Tricalciumaluminat (3CaO*Al₂O₃) und Tetracalciumaluminatferrit (4CaO*Al₂O₃*Fe₂O₃) vor. Im Sinne der vorliegenden Erfindung kann grundsätzlich ein beliebiger Zement eingesetzt werden, wie beispielsweise Portlandzement, Portlandkompositzement, Hochofenzement, Puzzolanzement oder Kompositzement. Bevorzugt wird erfindungsgemäß Portlandzement eingesetzt. Bezogen auf den Gesamtfeststoffgehalt des wässrigen Gemischs von Schritt (i) wird Zement in einer Menge von etwa 25 bis 45 Gew.-%, beispielsweise etwa 30 bis 40 Gew.-% eingesetzt. Die Verwendung von Zement, z.B. Portland-Zement, in dieser Menge hat den Vorteil, dass das hergestellte Dämmmaterial eine hohe Zugfestigkeit aufweist. Die Rohmischung hat eine lange offene Verarbeitungszeit, so dass ein Mischer, in welchem das wässrige Gemisch in Schritt (i) bereitgestellt wird, nur bei längeren Stillstandszeiten zwischen den Mischvorgängen zu reinigen ist.

Den Ausgangsmaterialien für ein erfindungsgemäßes Dämmmaterial kann außerdem Rückgut in Form eines Pulvers oder Granulats, insbesondere als Suspension, zugesetzt werden. Unter dem Begriff "Rückgut" werden Altmaterialien in zerkleinerter Form verstanden. Beispielsweise können zu Pulver zerkleinerte Reststücke von erfindungsgemäßem Dämmmaterial oder beim Zerschneiden des Materials zu Platten anfallender Staub eingesetzt werden. Das Rückgut kann beispielsweise in einer Menge von etwa 3 bis 7 Gew.-% bezogen auf den Gesamtfeststoffgehalt des wässrigen Gemischs von Schritt (i) eingesetzt werden.

Kaolin oder Meta-Kaolin kann als optionaler Bestandteil dem wässrigen Gemisch von Schritt (i) zugegeben werden. Bevorzugt wird Kaolin in einer Menge von etwa 5 bis 10 Gew.-%, insbesondere etwa 6 bis 8 Gew.-% eingesetzt. Kaolin setzt als puzzolanischer Zuschlagstoff die Hydrationswärme und somit Spannungen herab.

Ein Erhärtungsbeschleuniger im Sinne der Erfindung dient der Beschleunigung des Erhärtens und verbessert vor allem die Anfangsfestigkeit des Materials. Als besonders geeignet haben sich im Sinne der Erfindung solche Erhärtungsbeschleuniger erwiesen, welche die Frühfestigkeitsentwicklung im Bereich von 6 bis 12 Stunden deutlich erhöhen. Dies kann erreicht werden, indem das Wachstum der für die Frühfestigkeitsentwicklung essentiellen Calciumsilikatkristalle stark beschleunigt wird. Auf diese Weise gelingt es, die Frühfestigkeit deutlich zu erhöhen ohne die Endfestigkeit und Dauerhaftigkeit des resultierenden Materials herabzusetzen. Geeignet sind insbesondere Erhärtungsbeschleuniger, welche Calciumsilikathydratkristalle enthalten, wie sie z. B. auch in Beton selbst vorkommen. Diese Calciumsilikathydratkristalle dienen als Kristallisationskeime für die Aushärtung des Baustoffgemischs. Beispielsweise kann ein solcher Erhärtungsbeschleuniger in Form einer flüssigen Zubereitung, welche Calciumsilikathydratkristalle enthält, eingesetzt werden. Ein Beispiel für einen solchen Erhärtungsbeschleuniger ist X-Seed, erhältlich von der Firma BASF.

Weitere zur Verwendung bei der erfindungsgemäßen Herstellung eines Dämmmaterials geeignete Erhärtungsbeschleuniger sind in den internationalen Patentanmeldungen WO 2010/026155 und WO 2011/131378 beschrieben.

Ein Erhärtungsbeschleuniger wird im Sinne der Erfindung vorzugsweise in einer Menge von etwa 3 bis 8 Gew.-% bezogen auf den Gesamtfeststoffgehalt des wässrigen Gemischs von Schritt (i) eingesetzt.

Die Zugabe eines Erhärtungsbeschleunigers im Sinne der Erfindung hat gegenüber der Verwendung von Schnellzement wesentliche Vorteile. Während Schnellzement insgesamt schneller aushärtet, wird durch einen erfindungsgemäßen Erhärtungsbeschleuniger speziell die Frühfestigkeit verbessert. Zudem muss bei der Verwendung von Schnellzement die Wassermenge genau angepasst werden, um den gewünschten Effekt des schnelleren Aushärtens zu erreichen. Ein Erhärtungsbeschleuniger im Sinne der Erfindung erreicht dagegen bei beliebigen Wassermengen den gewünschten Effekt der verbesserten Frühfestigkeit. Ein weiterer Nachteil von Schnellzement ist die mit dessen Verwendung verbundene intensive Wärmeentwicklung. Diese wirkt sich nachteilig auf die Porosität des Materials aus, da die feinen Bläschen des in Schritt (iii) eingemischten Schaums durch die Wärmeentwicklung leicht zerstört werden.

Das Verhältnis von Wasser zu Feststoff wird in dem wässrigen Gemisch von Schritt (i) so gewählt, dass es etwa 0,5:1 bis 1,5:1 beträgt, vorzugsweise etwa 0,6:1 bis 1:1. Mit abnehmendem Wasser-zu-Feststoff-Verhältnis nimmt die Viskosität vor und insbesondere nach Zugabe des Schaums deutlich zu. Außerdem konnte eine Zunahme der Grünstandsfestigkeit festgestellt werden. Das Unterrühren des Schaums wird mit abnehmendem Wasser-zu-Feststoff-Verhältnis jedoch schwieriger. Andererseits sollte das Verhältnis von Wasser zu Feststoff auch nicht wesentlich vergrößert werden, da hierdurch die Gussstabilität verringert, die Ansteifungszeit verlängert und die Wassermenge im Block erhöht wird, was aus trocknungstechnischen Gründen nachteilig ist. Ein Wasser-zu-Feststoff-Verhältnis von 0,6:1 bis 1:1 ist empfehlenswert, da hier eine gute Homogenisierung beim Mischen und gute Produkteigenschaften erreicht werden.

Gemäß der Erfindung enthält das wässrige Gemisch von Schritt (i) keine organischen oder anorganischen Fasern. Es wurde gefunden, dass die Anwesenheit von Fasern sich nachteilig auf die Porösität des hergestellten Dämmmaterials auswirkt. Insbesondere kann sich die Standzeit verlängern, da Fasern unkontrolliert Wasser abgeben können. Die über den Tensidschaum eingebrachten feinporigen Luftblasen werden zerstört.

Nach dem Vermischen der verschiedenen Bestandteile in Schritt (i) beträgt die Temperatur des wässrigen Gemischs vorzugsweise etwa 19 bis 30°C. Weiter bevorzugt ist eine Temperatur im Bereich von etwa 20 bis 25°C. Diese Temperatur kann beispielsweise durch Wahl der Temperatur des verwendeten Wassers in Abhängigkeit von der Temperatur der Feststoffe eingestellt werden.

Separat von der Herstellung des wässrigen Gemischs wird in Schritt (ii) ein Schaum bereitgestellt. Hierfür wird Luft in ein Gemisch aus Wasser und Tensid eingebracht. Tenside können grundsätzlich beliebig aus natürlichen und synthetischen Tensiden sowie Gemischen davon ausgewählt werden. Bevorzugt werden erfindungsgemäß anionische oder nichtionische Tenside oder Mischungen davon eingesetzt. Nichtionische Tenside sind insofern von Vorteil, als sie eine Hydrophobierung des mineralischen Baumaterials erleichtern.

Bei der Herstellung des Schaums in Schritt (ii) können weiterhin Stabilisatoren eingesetzt werden. Besonders bevorzugt wird im Sinne der Erfindung ein Tensid verwendet, welches die Bestandteile Butylglycol und Ethandiol umfasst.

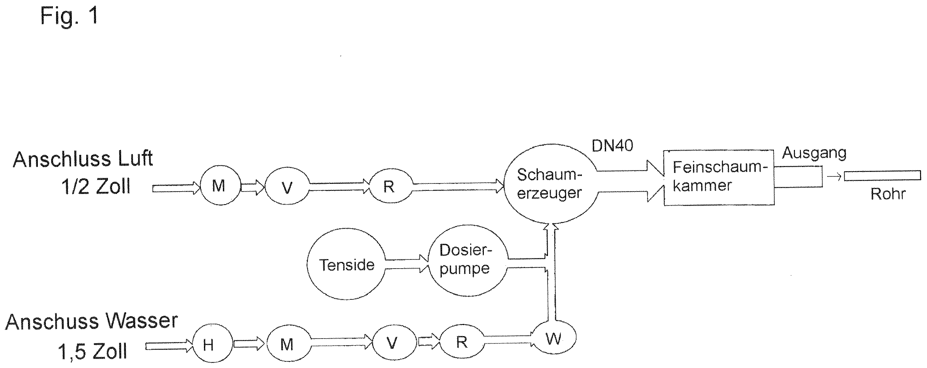

Zur Herstellung des Schaums in Schritt (ii) kann vorteilhafterweise ein Schaumerzeuger verwendet werden. Das Prinzip des Aufbaus eines Schaumerzeugers zur Verwendung in einem erfindungsgemäßen Verfahren ist in Figur 1 veranschaulicht.

Die Bedingungen zur Bereitstellung des Schaums in Schritt (ii) werden vorzugsweise so gewählt, dass die Rohdichte des Schaums etwa 40 bis 120 kg/m³, vorzugsweise etwa 60 bis 100 kg/m³ beträgt.

Es hat sich erfindungsgemäß als vorteilhaft erwiesen, einen feinporigen Tensidschaum mit gleichmäßiger, definierter Porengröße im Bereich von 100 bis 800 µm zu verwenden. Die Porendurchmesser besitzen günstigerweise eine relativ schmale Gaussverteilung.

Die zugegebene Schaummenge richtet sich nach der gewünschten Rohdichte des Endprodukts, die hierdurch auf einen gewünschten Wert im Bereich von 80 bis 130 kg/m² eingestellt wird. Es ergeben sich homogene Produkte guter und gleichmäßiger Festigkeit und vorbestimmter Rohdichte.

Die Temperatur des in Schritt (ii) bereitgestellten Schaums entspricht vorteilhafterweise im Wesentlichen der Temperatur des wässrigen Gemischs von Schritt (i). Bevorzugt ist eine Temperatur im Bereich von etwa 19 bis 30°C, weiter bevorzugt etwa 20 bis 25°C. Vorteilhafterweise sollte die Temperatur des Schaums von Schritt (ii) um nicht mehr als 5 K von der Temperatur des wässrigen Gemischs von Schritt (i) abweichen.

Schaum und wässriges Gemisch werden in Schritt (iii) miteinander vermischt, um eine Rohmischung zu erhalten. Hierfür kann beispielsweise der separat erzeugte Schaum in den Mischer eingebracht werden, in welchem das wässrige Gemisch bereitgestellt wurde. Bei niedriger Drehzahl des Mischwerkzeugs wird der Schaum dann in das wässrige Gemisch untermischt. Das Einbringen des Schaums in das wässrige Gemisch kann auch über ein Y-förmiges Mischrohr erfolgen, in das über eine erste Speiseleitung das wässrige Gemisch aus Schritt (i) und über eine zweite Speiseleitung der Schaum aus Schritt (ii) zugeführt wird. Die beiden Massen werden dann gemeinsam weiter durch einen statischen Mischer gefördert, wo eine Homogenisierung der Schaummasse erfolgt.

Die erhaltene Rohmischung wird anschließend in Schritt (iv) in eine Form eingebracht. In dieser Form verbleibt die Rohmischung für mindestens 5 h, bevorzugt für mindestens 10h und besonders bevorzugt für mindestens 15h, um ein Rohmaterial zu erhalten. Vorzugsweise verbleibt die Rohmischung für 6 bis 72h in der Form. Die Temperatur wird dabei vorzugsweise so gewählt, dass sie in etwa der Ausgangstemperatur des wässrigen Gemischs und des Schaums entspricht. Bevorzugt weicht die Temperatur um nicht mehr als 5 K von der Ausgangstemperatur des wässrigen Gemischs und des Schaums ab.

Das Rohmaterial wird in Schritt (v) dampfgehärtet, dies ggf. nach Aufteilen, insbesondere Zerschneiden in kleinere Portionen. Hierzu wird das Rohmaterial in einen Autoklaven eingebracht und bei geeigneten Druck- und Temperaturbedingungen gehärtet. Vorteilhafterweise ist der Druck in dem Autoklaven zunächst gegenüber Atmosphärendruck um 0,2 bis 0,5 bar abgesenkt. Durch das Evakuieren kann die Masse schneller aufgewärmt und auf maximale Temperatur gebracht werden. Je intensiver die Vakuumbehandlung, umso geringer ist die Temperaturdifferenz zwischen dem Zentrum des Blocks und dem Dampfraum. Durch langsames Aufdampfen des Autoklaven werden Temperaturunterschiede zwischen inneren und äußeren Blockbereichen verringert, so dass Thermospannungen, die zu Rissen führen, vermieden werden. Als günstig hat sich eine langsame Aufheizrate erwiesen, wobei im unteren Druckbereich ein kleiner Aufheizgradient notwendig ist, um ein Zerfließen bzw. Zerstören des gewünschten Dämmmaterials zu vermeiden. Mit Aufheizzeiten von ca. 1 bis 4 h ist eine rissfreie Härung möglich. Zur Erhöhung der Verfahrenssicherheit beträgt die daran anschließende Haltezeit 8 h bei einem Haltedruck von 12 bar. Da ein zu schnelles Abdampfen zu Härteschäden im Dämmmaterial führen würde, sollte die Abdampfzeit bei 2 bis 4,5 h liegen.

Bei dem Schritt des Dampfhärtens in einem Autoklaven kann das Rohmaterial sich wahlweise noch in der Form befinden oder die Form kann zuvor zumindest teilweise entfernt werden.

In einer bevorzugten Ausführungsform der Erfindung wird die Form vor dem Dampfhärten bis auf den Formboden entfernt. Das auf dem Formboden befindliche Rohmaterial kann dann optional noch weiter vorgelagert werden (z. B. 6 bis 72h) bis es dann, weiterhin auf dem Formboden befindlich, in den Autoklaven eingeführt und dort dampfgehärtet wird. Der Formboden dient dabei einer Stabilisierung des ansonsten fragilen Rohmaterials.

Nach dem Dampfhärten kann das Material wahlweise in kleinere Blöcke geschnitten werden. Ebenfalls möglich und sogar zu empfehlen ist es, bereits das Rohmaterial vor dem Schritt des Dampfhärtens in kleinere Stücke zu zerteilen.

In Schritt (vi) des erfindungsgemäßen Verfahrens erfolgt eine Trocknung des dampfgehärteten Rohmaterials. Das aus dem Trocknungsprozess stammende Wasser und/oder Kondensat aus dem Dampfhärtungsverfahren im Autoklaven kann aufgefangen und ggf. nach Aufarbeitung dem wässrigen Ausgangsgemisch aus Schritt (i) des erfindungsgemäßen Verfahrens zugeführt werden. Dies bewirkt eine verbesserte Festigkeit des Materials bzw. eine bessere Wirkung des Zements. Vor allem die Wiederverwendung von Kondensat aus dem Autoklavierungsprozess hat sich hier als besonders vorteilhaft erwiesen.

Falls gewünscht schließt an die Trocknung eine mechanische Nachbearbeitung des erhaltenen Dämmmaterials an. Das Material kann beispielsweise auf ein gewünschtes Format zugesägt werden. Die Nachbearbeitung kann weiter auch eine Grundierung oder Hydrophobierung einschließen, um beispielsweise die Witterungsbeständigkeit des Materials zu erhöhen. Auch eine Beschichtung des Materials ist möglich.

Mit dem erfindungsgemäßen Verfahren wird ein Dämmmaterial erhalten, das sich durch eine Rohdichte von 80 bis 130 kg/m³ auszeichnet. Durch die erfindungsgemäße Herstellungsweise ist es überraschenderweise möglich, die Wärmeleitfähigkeit signifikant herabzusetzen und einen rechnerischen Wärmeleitwert λ von weniger als 0,040 W/mK zu erreichen. Die Wärmeleitfähigkeit λ liegt vorzugsweise bei 0,039 W/mK oder darunter. Noch weiter bevorzugt sind Wärmeleitwerte λ von nicht mehr als 0,038 W/mK.

Die Erfindung soll durch die nachfolgenden Beispiele und Figuren weiter veranschaulicht werden.

**Figur 1** veranschaulicht den Aufbau eines Schaumerzeugers für die Verwendung bei der Herstellung eines erfindungsgemäßen Dämmmaterials. H: Handrad, M: Druckregeleinheit, V: Ventil zum Ein- und Ausschalten, R: Rückschlagventil, W: Wasseruhr mit Taktgeber.

Der Schaumerzeuger enthält separate Anschlüsse für die Zufuhr von Luft und Wasser. In die Wasserzufuhrleitung wird vorab über eine Dosierpumpe ein Tensid oder ein Tensidgemisch eingebracht. Die Tensidzufuhr erfolgt unter Druck, wobei der benötigte Druck von der Dosierpumpe selbst erzeugt werden kann. Hierfür kann ein Druck von bis zu 10 bar gewählt werden.

Die Wasserzufuhrleitung weist einen größeren Durchmesser auf als das Leitungssytem für die Luftzufuhr. In Figur 1 beträgt der Durchmesser der Wasserzufuhrleitung 1,5 Zoll, während der Durchmesser für die Zuleitung der Luft 1/2 Zoll beträgt.

Die eigentliche Schaumherstellung erfolgt in einem Schaumgenerator. Wasser wird diesem mit einem Druck von bis zu 10 bar zugeführt. Besonders geeignet ist ein Druckbereich von 1,5 bis 5 bar, beispielsweise etwa 3 bar. Die Luftzufuhr erfolgt mit einem Druck von bis zu 10 bar. Geeignet ist insbesondere ein Druckbereich von 1,5 bis 5 bar, beispielsweise etwa 3 bar.

Aus dem Schaumgenerator wird der Schaum über eine Rohrleitung in eine Feinschaumkammer geleitet. Der Durchmesser dieser Rohrleitung beträgt in Figur 1 ca. 40 mm. Aus der Feinschaumkammer wird der Schaum weiter über einen ersten Rohrabschnitt und einen anschließenden weiteren Rohrabschnitt ausgeleitet. In Figur 1 beträgt der Durchmesser des ersten Rohrabschnitts ca. 40 mm, während der weitere Rohrabschnitt einen Durchmesser von ca. 60 mm aufweist.

Es hat sich als vorteilhaft erwiesen, in dem abschließenden Rohrabschnitt mit größerem Durchmesser ein oder mehrere Kunststoffschwämme anzuordnen. Dadurch gelingt es, einen besonders kleinporigen Schaum bereitzustellen.

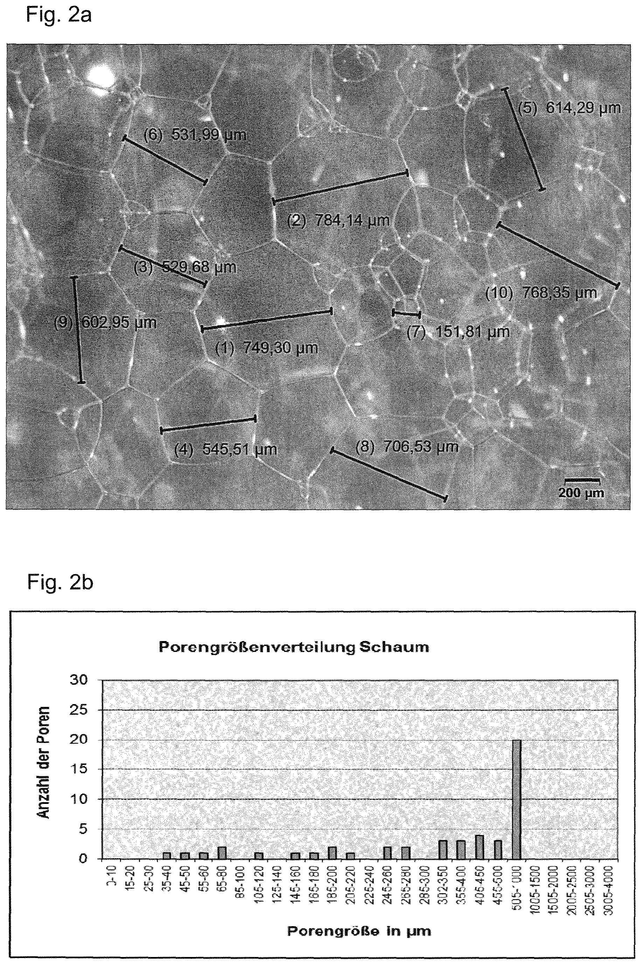

**Figur 2** zeigt das Ergebnis einer Untersuchung der Porengrößen in einem Tensidschaum. Figur 2a ist eine mikroskopische Aufnahme eines beispielhaften Tensidschaums. Figur 2b gibt die Porengrößenverteilung in diesem Schaum wieder.

### Beispiel 1: Herstellung eines Tensidschaums

Unter Verwendung eines in Figur 1 veranschaulichten Schaumerzeugers wird ein Tensid, welches Butylglycol und Ethandiol enthält mittels einer Dosierpumpe in die Wasserzufuhrleitung zudosiert. Der Wasserdruck beträgt ca. 3 bar. Die Dosierung wird so reguliert, dass 1,6 Liter Tensid auf 51 Liter Wasser zugemischt werden. Über eine separate Zufuhrleitung wird Luft mit einem Druck von 3 bar zugeführt. Die Luftzufuhr wird so reguliert, dass ein Schaum mit einer Rohdichte von ca. 100 g/l gebildet wird.

Eine Untersuchung des erzeugten Schaums zeigt Porengrößen von zwischen 100 und 800 µm. Die Ergebnisse sind in Figur 2 veranschaulicht.

### Beispiel 2: Herstellung eines mineralischen Dämmmaterials

In einem Mischer wird zunächst eine Suspension aus 71 kg Wasser, 8, 9 kg Staub (Rückgut), 17,0 kg Kalkhydrat, 25,2 kg Quarzmehl 12 Mikron, 44,0 kg Portland-Zement (EN197-1CEMI52,5R), 7,0 kg Kaolin und 7,9 kg Erhärtungsbeschleuniger MasterX-Seed100 hergestellt. In diese Suspension wird der in Beispiel 1 erzeugte Tensidschaum in einer Menge von 69,3 kg bei einem Volumen von 758,9 l eingebracht. Der Schaum wird dabei in die noch im Mischgutbehältnis befindliche Wasser-Feststoff-Suspension bei laufendem Mischer eingeleitet und bei niedriger Drehzahl des Mischwerkzeugs untergemischt.

Die erhaltene Rohmischung wird anschließend in eine Form eingegossen und vorzugsweise mindestens 20h und bei großen Teilen auch länger, z. B. für 48 h, zu einem noch plastischen Block ansteifen gelassen. Die Form wird dann bis auf den Formboden entfernt und der noch weiterhin auf dem Formboden befindliche Block vorzugsweise in Teile geschnitten und danach in einen Autoklaven eingeführt und dort dampfgehärtet. Anschließend wird der autoklavierte Kuchen in einem Trockner für bis zu 48h, bei sehr großen Teilen bis zu 96 h, getrocknet und schließlich auf das gewünschte Format zugesägt. Bei kleineren Formaten, insbesondere kleineren Platten, kann die Trocknung durch einen Mikrowellentrocknungsprozess in kürzeren Zeiten, beispielsweise in 60 Min., erreicht werden.

Die Untersuchung der Wärmeleitfähigkeit des resultierenden Produkts ergibt einen Lambda-Wert von etwa 0,039 W/mK.

## Patentansprüche

1. Verfahren zur Herstellung eines Dämmmaterials, umfassend die Schritte:
(i) Bereitstellen eines wässrigen Gemischs, welches Wasser, SiO₂, Kalkhydrat, Zement, und einen Erhärtungsbeschleuniger umfasst, und welches keine organischen oder anorganischen Fasern enthält,
(ii) Bereitstellen eines Schaumes durch Einbringen von Luft in ein Gemisch umfassend Wasser und ein Tensid,
(iii) Einmischen des Schaumes in das wässrige Gemisch, um eine Rohmischung zu erhalten
(iv) Einbringen der Rohmischung in eine Form, und Belassen der Rohmischung für mindestens 5 h, vorzugsweise für mindestens 10 h und besonders bevorzugt für mindestens 15 h, in der Form, um ein Rohmaterial zu erhalten,
(v) Dampfhärten des in Schritt (iv) erhaltenen Rohmaterials in einem Autoklaven, dies ggf. nach Zuschneiden in Teile und
(vi) Trocknen des dampfgehärteten Rohmaterials.

2. Verfahren nach Anspruch 1, wobei der Erhärtungsbeschleuniger Calciumsilikathydratkristalle umfasst.

3. Verfahren nach Anspruch 1 oder 2, wobei das wässrige Gemisch in Schritt (i) mindestens einen weiteren Bestandteil umfasst, der ausgewählt ist aus Kaolin, Rückgut, und Gemischen davon.

4. Verfahren nach einem der vorhergehenden Ansprüche, wobei das wässrige Gemisch in Schritt (i) bezogen auf den Gesamtfeststoffgehalt
25-35 Gew.-% SiO₂,
18-35 Gew.-% Kalkhydrat,
25-45 Gew.-% Zement
ggf. 5-10 Gew.-%, vorzugsweise 6-8 Gew.-% Kaolin, und
3-8 Gew.-% Erhärtungsbeschleuniger umfasst.

5. Verfahren nach einem der vorhergehenden Ansprüche, wobei das Verhältnis von Wasser zu Feststoff in dem wässrigen Gemisch von Schritt (i) etwa 0,5:1 bis 1,5:1, vorzugsweise 0,6:1 bis 1:1 beträgt.

6. Verfahren nach einem der vorhergehenden Ansprüche, wobei die Temperatur des wässrigen Gemischs von Schritt (i) etwa 19-30°C, vorzugsweise etwa 20-25°C beträgt.

7. Verfahren nach einem der vorhergehenden Ansprüche, wobei die Rohdichte des Schaumes in Schritt (ii) 40 bis 120 kg/m³, vorzugsweise 60 bis 100 kg/m³ beträgt.

8. Verfahren nach einem der vorhergehenden Ansprüche, wobei beim Einmischen in Schritt (iii) die Temperatur des Schaumes von Schritt (ii) in etwa der Temperatur des wässrigen Gemischs von Schritt (i) entspricht, vorzugsweise wobei die Temperatur des Schaums um nicht mehr als 5K von der Temperatur des wässrigen Gemischs abweicht.

9. Verfahren nach einem der vorhergehenden Ansprüche, wobei die Rohmischung für 6-72 h in der Form verbleibt, vorzugsweise bei einer im Wesentlichen konstanten Temperatur, wobei die Temperatur bevorzugt in etwa der Ausgangstemperatur des wässrigen Gemischs und des Schaums entspricht.

10. Verfahren nach einem der vorhergehenden Ansprüche, wobei die Form vor dem Dampfhärten teilweise oder vollständig entfernt.

11. Verfahren nach einem der vorhergehenden Ansprüche, wobei das Rohmaterial aus Schritt (iv) in kleinere Teilstücke zerteilt wird.

12. Verfahren nach einem der vorhergehenden Ansprüche, wobei das getrocknete Material nach Schritt (vi) mechanisch bearbeitet wird.

## Claims

1. Method for producing an insulating material, comprising the steps:
(i) Providing an aqueous mixture, which contains water, SiO₂, lime hydrate, cement and a setting accelerator and comprises no organic or inorganic fibres,
(ii) providing a foam through introducing air into a mixture comprising water and a surfactant,
(iii) mixing the foam into the aqueous mixture to obtain a raw mixture,
(iv) introducing the raw mixture into a mould and leaving the raw mixture for at least 5 h, preferably for at least 10 h, and particularly preferably for at least 15 h, in the mould to obtain a raw material,
(v) steam curing the raw material obtained in step (iv) in an autoclave, this possibly after cutting into sections, and
(vi) drying the steam cured raw material.

2. Method according to claim 1, wherein the setting accelerator comprises calcium silicate hydrate crystals.

3. Method according to claim 1 or 2, wherein the aqueous mixture comprises at least one further component in step (i), which is selected from kaolin, recycled materials, and mixtures of the same.

4. Method according to one of the preceding claims, wherein the aqueous mixture in step (i) comprises, related to the total solids content,
25-35 wt % SiO₂,
18-35 wt % lime hydrate,
25-45 wt % cement,
possibly 5-10 wt %, preferably 6-8 wt % kaolin, and
3-8 wt % setting accelerator.

5. Method according to one of the preceding claims, wherein the ratio of water to solids in the aqueous mixture of step (i) is approximately 0.5:1 to 1.5:1, preferably 0.6:1 to 1:1.

6. Method according to one of the preceding claims, wherein the temperature of the aqueous mixture of step (i) is approximately 19-30°C, preferably approximately 20-25°C.

7. Method according to one of the preceding claims, wherein the raw density of the foam in step (ii) is 40 to 120 kg/m³, preferably 60 to 100 kg/m³.

8. Method according to one of the preceding claims, wherein the temperature of the foam of step (ii) approximately equals the temperature of the aqueous mixture of step (i) during the introduction of step (iii), preferably wherein the temperature of the foam differs from the temperature of the aqueous mixture by no more than 5K.

9. Method according to one of the preceding claims, wherein the raw mixture remains in the mould for 6-72 h, preferably at a substantially constant temperature, wherein the temperature preferably approximately equals the starting temperature of the aqueous mixture and the foam.

10. Method according to one of the preceding claims, wherein the mould is removed prior to steam curing either partly or entirely.

11. Method according to one of the preceding claims, wherein the raw material of step (iv) is divided into smaller part sections.

12. Method according to one of the preceding claims, wherein the dried material is mechanically processed after step (vi).

## Revendications

1. Procédé pour fabriquer un matériau isolant, comprenant les étapes :
(i) d'utilisation d'un mélange aqueux, lequel comprend de l'eau, du SiO₂, de l'hydroxyde de calcium, du ciment, et un accélérateur de durcissement, et lequel ne contient aucune fibre organique ou anorganique,
(ii) d'utilisation d'une mousse par introduction d'air dans un mélange comprenant de l'eau et un agent tensioactif,
(iii) d'incorporation de la mousse dans le mélange aqueux, afin d'obtenir un mélange brut,
(iv) d'introduction du mélange brut dans un moule, et de maintien du mélange brut dans le moule pendant au moins 5 h, de préférence pendant au moins 10 h, et de manière particulièrement préférée pendant au moins 15 h, afin d'obtenir un matériau brut,
(v) de durcissement à la vapeur du matériau brut obtenu à l'étape (iv) dans un autoclave, ceci le cas échéant après découpe en pièces et
(vi) de séchage du matériau brut durci à la vapeur.

2. Procédé selon la revendication 1, dans lequel l'accélérateur de durcissement comprend des cristaux de silicate de calcium hydraté.

3. Procédé selon la revendication 1 ou 2, dans lequel le mélange aqueux à l'étape (i) comprend au moins un autre constituant, qui est choisi parmi le kaolin, les produits en retour, et des mélanges de ceux-ci.

4. Procédé selon l'une quelconque des revendications précédentes, dans lequel le mélange aqueux à l'étape (i) comprend, par rapport à la teneur totale en matières solides
25-35 % en poids de SiO₂,
18-35 % en poids d'hydroxyde de calcium,
25-45 % en poids de ciment,
le cas échéant 5-10 % en poids, de préférence 6-8 % en poids de kaolin, et
3-8 % d'accélérateur de durcissement.

5. Procédé selon l'une quelconque des revendications précédentes, dans lequel le rapport de l'eau sur la matière solide dans le mélange aqueux de l'étape (i) atteint sensiblement 0,5/1 à 1,5/1, de préférence 0,6/1 à 1/1.

6. Procédé selon l'une quelconque des revendications précédentes, dans lequel la température du mélange aqueux de l'étape (i) atteint sensiblement 19-30 °C, de préférence sensiblement 20-25 °C.

7. Procédé selon l'une quelconque des revendications précédentes, dans lequel la masse volumique apparente de la mousse à l'étape (ii) atteint 40 à 120 kg/m³, de préférence 60 à 100 kg/m³.

8. Procédé selon l'une quelconque des revendications précédentes, dans lequel, lors du mélange à l'étape (iii), la température de la mousse de l'étape (ii) correspond approximativement à la température du mélange aqueux de l'étape (i), de préférence dans lequel la température de la mousse ne diffère pas de plus de 5 K de la température du mélange aqueux.

9. Procédé selon l'une quelconque des revendications précédentes, dans lequel le mélange brut reste dans le moule pendant 6-72 h, de préférence à une température sensiblement constante, dans lequel la température correspond de préférence approximativement à la température initiale du mélange aqueux et de la mousse.

10. Procédé selon l'une quelconque des revendications précédentes, dans lequel le moule est retiré partiellement ou entièrement avant le durcissement à la vapeur.

11. Procédé selon l'une quelconque des revendications précédentes, dans lequel le matériau brut issu de l'étape (iv) est divisé en tronçons plus petits.

12. Procédé selon l'une quelconque des revendications précédentes, dans lequel le matériau séché est usiné mécaniquement après l'étape (vi).
